# EUROPÄISCHE PATENTANMELDUNG

(11) **EP 3 767 485 A1**
(43) Veröffentlichungstag der Anmeldung: **20.01.2021**
(21) Anmeldenummer: 19187033.6
(22) Anmeldetag: 18.07.2019
(51) Int. Cl.: G06F 16/176, G06F 1/12

(54) **VERFAHREN UND SYSTEM ZUM AUSTAUSCH ZEITGESTEMPELTER DATEN**

(71) Anmelder: Siemens Aktiengesellschaft, 80333 München (DE)
(72) Erfinder: Höfele, Markus, 68259 Mannheim (DE); Kob, Peter, 90562 Heroldsberg (DE); Schrey, Rolf, 41189 Mönchengladbach (DE); Zeltner, Armin, 91085 Weisendorf (DE)

(57) **Zusammenfassung**

Die Erfindung betrifft ein Verfahren und ein System zum Austausch zeitgestempelter Daten (MSG1, MSG3) zwischen Komponenten (G0, ..., G3) in einem Datennetzwerk, wobei jede Komponente (G0, ..., G3) jeweils eine lokale Uhr aufweist, wobei die Uhrzeit der jeweiligen lokalen Uhr zum Zeitstempeln von zu versendenden Daten (MSG1, MSG3) bei der Übertragung der Daten (MSG1, MSG3) von einer sendenden Komponente (G0, ..., G3) zu einer empfangenden Komponente (G0, ..., G3) verwendet wird. Dabei wird in jeder die Daten (MSG1, MSG3) empfangenden Komponente (G0, ..., G3) eine Zeitdifferenztabelle (ZT) mit jeweils einer Zeitdifferenzinformation (ΔG0, ..., ΔG3) zwischen der lokalen Uhrzeit und der Uhrzeit jeder sendenden Komponente (G0, ..., G3) geführt, wobei bei der Verwendung oder Speicherung empfangener Daten (MSG1, MSG3) anhand des Zeitstempels der empfangenen Daten (MSG1, MSG3) und anhand der Zeitdifferenzinformation (ΔG0, ..., ΔG3) zur sendenden Komponente (G0, ..., G3) durch die empfangende Komponente (G0, ..., G3) den Daten (MSG1, MSG3) ein auf die jeweilige lokale Uhrzeit korrigierter Zeitstempel zugeordnet. Die grundsätzlich problematische Synchronisierung von lokalen Uhren bzw. Zeitgebern wird unnötig, stattdessen kann durch eine Komponente bzw. eine entsprechende API-Funktion in jeder Komponente (Client) eine Korrektur der Zeitinformation der Daten lokal erfolgen. Das ermöglicht es auch in den Fällen, in denen eine Komponente von mehreren anderen Komponenten Daten empfängt, diese zeitgenau miteinander zu vergleichen bzw. mit einheitlichem Zeitstempel zu archivieren bzw. protokollieren.

## Beschreibung

Die Erfindung betrifft ein Verfahren zum Austausch zeitgestempelter Daten zwischen Komponenten in einem Datennetzwerk gemäß dem Oberbegriff des Patentanspruchs 1, und ein System zum Austausch zeitgestempelter Daten zwischen Komponenten in einem Datennetzwerk gemäß dem Oberbegriff des Patentanspruchs 10.

Bei der Verwendung von Daten in Datennetzwerken, insbesondere bei industriellen Anwendungen, sind nicht nur die Daten selbst von Belang, sondern auch eine Zeitinformation (meist ein Zeitstempel), die angibt, wann das durch die Daten beschriebene Ereignis stattgefunden hat oder zumindest wann die Daten von einer die Daten erzeugenden bzw. sendenden Komponente versendet worden sind. Daten in diesem industriellen Umfeld können Messdaten, Alarme, Fehlerdaten, Steuerungsdaten/Befehle und andere Daten sein.

Beim Zeitstempeln von Daten oder von Datenpaketen bei der paketvermittelten Datenübertragung wird regelmäßig eine lokale Uhr der die Daten erzeugenden bzw. versendenden Komponente zur Erzeugung des Zeitstempels verwendet; der Zeitstempel kann dabei sowohl die Daten selbst, als auch die komplette Nachricht bzw. das Datenpaket betreffen. Oft sind solche lokalen Uhren nicht hinreichend mit einem Zeitnormal synchronisiert, darüber hinaus kann das Problem auftreten, dass im Laufe der Zeit eine Drift der lokalen Uhr die Abweichung zu einem etwaigen zentralen Zeitnormal verändert, so dass die Abweichung sich vergrößern oder verkleinern kann und zumindest nicht konstant ist. Durch die Nicht-Synchronität der lokalen Uhren in einem Datennetzwerk, insbesondere in einem Cloud-/Edge-Device-Verbund im industriellen Umfeld sind also auch die Zeitstempel der Daten bzw. Datenpakete oft ungenau bzw. nicht aussagekräftig, was die Bewertung, den Vergleich, die In-Bezugsetzung und allgemein die Verarbeitung von Daten schwierig macht, was insbesondere sogenannte Tags (Zeitstempel, Datenbeschreibungsinformation) in Protokollierungen und Steuerungsanwendungen im industriellen Umfeld erschwert bzw. unbrauchbar machen kann.

Zur Abhilfe wird meist versucht, die Uhren, also die lokalen Uhren der die Daten erzeugenden bzw. sendenden Komponenten und der die Daten konsumierenden bzw. empfangenden Komponenten möglichst häufig miteinander zu synchronisieren, insbesondere durch den Bezug auf ein gemeinsames Zeitnormal. Als gemeinsames Zeitnormal wird oft die DCF77-Zeitinformation des Zeitnormals der Physikalisch-Technischen Bundesanstalt verwendet. Bei der Synchronisierung der lokalen Uhren kann jedoch das Problem auftreten, dass bei der Synchronisation Zeitsprünge auftreten oder aber - zur Vermeidung dieser Zeitsprünge - Zeitdifferenzen bei der Synchronisierung über einen längeren Zeitraum verschliffen werden müssen, die Synchronisierung der lokalen Uhren also nicht zu einem diskreten Zeitpunkt erfolgen kann, sondern gleitend zur Vermeidung größerer Sprünge in der Zeitinformation erfolgt. Dies kann zu weiteren, wenn auch kleineren, aber nicht konstanten Abweichungen führen, was die geschilderten Probleme zumindest teilweise weiter existent sein lässt.

Insbesondere in modernen Automatisierungsanordnungen, bei denen ein lokales Automatisierungsnetzwerk bzw. eine lokale Automatisierungsanordnung eines Produktionsumfeldes mit einer sogenannten Cloud verbunden ist, also einem öffentlichen Netzwerk mit einer externen Datenverarbeitung, wobei das lokale Automatisierungsnetzwerk und die "Cloud" häufig mittels eines industriellen Edge-Gerätes bzw. Edge-Devices Daten miteinander austauschen, gehören oft die Daten austauschenden Komponenten, also einerseits die lokale Automatisierungsanordnung und ggf. das Edge-Gerät, und andererseits die Server der Cloud, unterschiedlichen Unternehmen, Eigentümern und oftmals auch unterschiedlichen Zeitzonen und Kontinenten an, so dass eine Synchronisierung der lokalen Uhren schlichtweg unmöglich ist, insbesondere in einer die durch die erforderliche Genauigkeit bedingten hohen Häufigkeit, also einer hohen Synchronisierungsfrequenz. In einem solchen Umfeld kann man schlichtweg nicht verhindern, dass die verschiedenen lokalen Uhren eine gewisse Abweichung und eine gewisse Drift zueinander aufweisen.

Es ist also eine Aufgabe der vorliegenden Erfindung, in einem Verbund mit Komponenten mit unterschiedlichen lokalen Uhren und voneinander abweichenden Uhrzeiten die präzise Verarbeitung zeitgestempelter Daten zu ermöglichen.

Es ist eine Kernidee der vorliegenden Lösung dieser Aufgabe, dass eine Synchronisierung der lokalen Uhren der an einem Datenaustausch beteiligten Komponenten vermieden wird, so dass die bei einer Synchronisierung auftretenden Zeitsprünge ebenfalls vermieden werden. Stattdessen ermittelt jeder Kommunikationspartner, zumindest jeder Daten empfangende bzw. konsumierende Kommunikationspartner bzw. Komponente, zu jedem seiner Partner, zumindest zu jedem seiner die Daten bereitstellenden bzw. sendenden Kommunikationspartner bzw. Komponente, ein sogenanntes Zeitdelta (Zeitdifferenzinformation) und aktualisiert und speichert dieses Zeitdelta regelmäßig. Die von einem Kommunikationspartner bezogenen zeitgestempelten Daten, insbesondere industrielle Tag-Werte (von engl. "tag" = Kennzeichen), werden vor der Verwendung oder Speicherung anhand des Zeitdeltas (kurz: Delta: Zeitdifferenzinformation) auf die eigene, lokale Zeit korrigiert. Dabei werden die Deltas (Zeitdifferenzinformationen) beispielsweise mittels eines zeitgestempelten Datentelegramms (reguläres Datenpaket oder spezielles Messdatenpaket) ermittelt und regelmäßig aktualisiert.

Die Aufgabe wird insbesondere durch ein Verfahren gemäß dem Patentanspruch 1 und durch ein System gemäß dem Patentanspruch 10 gelöst.

Dabei ist ein Verfahren zum Austausch zeitgestempelter Daten zwischen Komponenten in einem Datennetzwerk vorgesehen, wobei jede Komponente jeweils eine lokale Uhr aufweist, wobei die Uhrzeit der jeweiligen lokalen Uhr zum Zeitstempeln von zu versendenden Daten bei der Übertragung der Daten von einer sendenden Komponente zu einer empfangenden Komponente verwendet wird. Dabei wird in jeder die Daten empfangenden Komponente eine Zeitdifferenztabelle mit jeweils einer Zeitdifferenzinformation zwischen der lokalen Uhrzeit und der Uhrzeit jeder sendenden Komponente geführt, wobei bei der Verwendung oder Speicherung empfangener Daten anhand des Zeitstempels der empfangenen Daten und anhand der jeweiligen Zeitdifferenzinformation zur sendenden Komponente durch die empfangende Komponente den Daten eine auf ihre jeweilige lokale Uhrzeit korrigierter Zeitstempel zugeordnet wird. Die grundsätzlich problematische Synchronisierung von lokalen Uhren bzw. Zeitgebern wird unnötig, stattdessen kann durch eine Komponente bzw. eine entsprechende API-Funktion (API = Application Programming Interface) in jeder Komponente (Client) eine Korrektur der Zeitinformation der Daten lokal erfolgen. Das ermöglicht es auch in den Fällen, in denen eine Komponente von mehreren anderen Komponenten Daten empfängt, diese zeitgenau miteinander zu vergleichen bzw. mit einheitlichem Zeitstempel zu archivieren bzw. protokollieren.

Die Aufgabe wird außerdem durch ein System zum Austausch zeitgestempelter Daten in einem Datennetzwerk gelöst, wobei das System aus zumindest einer die Daten sendenden Komponente und zumindest einer die Daten empfangenden Komponente besteht, wobei jede Komponente eine lokale Uhr aufweist, wobei zumindest die die Daten sendende Komponente zum Zeitstempeln von zu versendenden Daten mit der eigenen Uhrzeitinformation bei der Übertragung zu einer empfangenen Komponente eingerichtet ist. Dabei weist zumindest die Daten empfangende Komponente eine Zeitdifferenztabelle mit jeweils einer Zeitdifferenzinformation zwischen der lokalen Uhrzeit und der Uhrzeit einer oder jeder die Daten sendenden Komponente auf, wobei zumindest in jeder die Daten empfangende Komponente ein Zeitstempelmodul vorgesehen ist, wobei das Zeitstempelmodul zur Zuweisung eines korrigierten Zeitstempels zu den empfangenden Daten eingerichtet ist, wobei das Zeitstempelmodul zur Verwendung einer Zeitdifferenzinformation aus der Zeitdifferenztabelle eingerichtet ist, wobei die Zeitdifferenzinformation eine Abweichung zwischen der lokalen Uhr der die Daten empfangenden Komponente und einer lokalen Uhr der die Daten sendende Komponente jeweils angibt. Durch das Zeitstempelmodul werden Zeitstempel der empfangenen Daten also auf die jeweilige lokale "Zeitzone" der die Daten verarbeitenden oder haltenden (speichernden) Komponente korrigiert. Durch dieses System können somit die Vorteile realisiert werden, die bereits anhand des Verfahrens diskutiert wurden.

Vorteilhafte Ausgestaltungen des erfindungsgemäßen Verfahrens sind in den abhängigen Patentansprüchen angegeben. Die dabei angegebenen Merkmale und deren Vorteile gelten sinngemäß auch für das erfindungsgemäße System. Die vorteilhaften Ausbildungen können sowohl einzeln als auch in sinnfälliger Kombination miteinander angewendet werden.

Als die die Daten empfangende Komponente wird vorteilhaft eine Cloud-Anwendung einer industriellen Automatisierungslösung verwendet. Das ist insofern von Vorteil, als zentrale Cloud-Anwendungen dazu geeignet sind, die Daten von verschiedenen Automatisierungslösungen mit einer jeweils anderen lokalen Uhrzeit zu aggregieren und miteinander zu verarbeiten. Außerdem ist es oft einfacher, eine zentrale Cloud-Anwendung mit einem offiziellen Zeitnormal zu synchronisieren, insbesondere mit einer DCF77-Zeit oder dergleichen. Dies führt dazu, dass die in der Cloud-Anwendung verarbeiteten bzw. gespeicherten Daten alle miteinander auf dasselbe Zeitnormal, nämlich die lokale Uhr der Cloud-Anwendung bzw. des Clouds-Servers und besonders vorteilhaft auf ein offizielles Zeitnormal (DCF77, UTC), normalisiert sind.

In einer vorteilhaften Variante wird die Zeitdifferenztabelle jeweils durch den Austausch von Messdatenpaketen zwischen jeweils zwei Komponenten aufgebaut oder aktualisiert. Das hat den Vorteil, dass die Bildung der Zeitdifferenzinformationen jeweils nur zwischen zwei Komponenten erfolgen muss und somit ein zentraler oder gar "lawinenartiger" Ansatz, der zum gleichzeitigen Austausch einer großen Menge von Daten führen kann, vermieden wird. Außerdem hat dies den Vorteil, dass keine der beiden beteiligten Komponenten besonderen Anforderungen hinsichtlich der Qualität (v.a. Stabilität) der eigenen, lokalen Uhr unterliegt.

Zusätzlich oder alternativ kann die Zeitdifferenztabelle aber auch beim regulären Empfang von Datenpaketen oder Datenübertragungen aufgebaut oder aktualisiert werden, wobei ein Sendezeitstempel des empfangenden Datenpaketes mit der lokalen Uhrzeit des die Daten empfangenden Systems bzw. der empfangenden Komponente verglichen wird. Zum einen bietet das den Vorteil, dass keine separaten Datenpakete ausgetauscht werden müssen, also vor allem keine separaten Messdatenpakete. Zum anderen wird die Zeitdifferenztabelle durch dieses Feature immer genau dann aktualisiert, wenn tatsächlich auch Daten übertragen werden, so dass nie eine veraltete Zeitdifferenzinformation verwendet wird, insbesondere dann nicht, wenn auch die Korrektur bzw. Normalisierung der empfangenen Daten zeitnah erfolgt. Selbstverständlich muss nicht aus jedem Datenpaket die Zeitinformation, also der Sendezeitstempel, extrahiert werden, sondern vorteilhaft kann die empfangende Komponente diesen Vorgang immer dann durchführen, wenn entsprechende Rechenzeit zur Verfügung steht oder die vorhandene Zeitdifferenzinformation schon ein gewisses Alter aufweist.

In einer weiteren, vorteilhaften Variante kann regelmäßig ein Korrekturvorgang der Zeitdifferenzinformation beim Empfang regulärer Daten bzw. Datenpakte erfolgen, wobei in den Fällen, in denen eine längere Zeit keine reguläre Datenübertragung von einer sendenden Komponente bei einer empfangenden Komponente registriert wird, ein zusätzlicher Austausch von Messdatenpaketen initiiert werden kann, damit die Zeitdifferenzinformation nicht veraltet. Insbesondere bei der Übertragung der Messdatenpakete kann durch geeignete Maßnahmen eine Laufzeit der Messdatenpakete erfasst und berücksichtigt werden. Geeignete Maßnahmen können dabei im Erfassen der Anzahl von Weiterleitungen der Datenpakete im Netzwerk, der sogenannten Hops, bestehen. Es kann aber auch eine Ermittlung der Übertragungsdauer durch bidirektionalen Datenaustausch erfolgen.

In einer alternativen Ausführungsform wird die Zeitdifferenztabelle von einer zentralen Instanz befüllt oder aktualisiert und bereitgestellt, wobei die zentrale Instanz anhand von direkt zwischen der zentralen Instanz und den Komponenten ausgetauschten Daten bzw. Messdatenpaketen eine Master-Zeitdifferenztabelle befüllt oder aktualisiert. Dies hat den Vorteil, dass die Master-Zeitdifferenztabelle in regelmäßigen Zeitabständen archiviert werden kann, so dass bei der Betrachtung von nicht-zeitkorrigierten historischen Daten anhand jeweiliger archivierter Zeitdifferenztabellen eine Abschätzung über die Abweichung des Zeitstempels dieser historischen Daten zu anderen Daten oder einem Zeitnormal nachträglich erfolgen kann, was die Nutzbarkeit der historischen Daten auch dann erhöht, wenn sie nicht zum Zeitpunkt der Speicherung "zeitnormalisiert" worden sind.

Vorteilhaft wird als die zentrale Instanz ein industrielles Edge-Gerät verwendet, welches vorteilhaft auch die Archivierung von historischen Master-Zeitdifferenztabellen übernehmen kann.

Vorteilhaft werden die Daten, die auf eine lokale Uhrzeit mittels eines korrigierten Zeitstempels "zeitnormalisiert" worden sind, entsprechend als zeitkorrigiert gekennzeichnet. Vorteilhaft umfasst die Kennzeichnung auch die Identifikation derjenigen Komponente, auf deren lokale Uhrzeit der Zeitstempel bzw. die Zeitinformation der Daten jeweils korrigiert wurde. Insbesondere bei aufgezeichneten, historischen Daten erleichtert dies die nachträgliche Bewertung der Daten und vor allen Dingen die nachträgliche In-Bezugssetzung mit anderen "historischen" Daten. Auch eine nachträgliche, weitere Korrektur der Zeitinformation wird somit ermöglicht. In einer vorteilhaften Variante ist es auch möglich, den Daten mehrere verschiedene Zeitstempel gleichzeitig zuzuordnen, also beispielsweise den lokalen Zeitstempel der sendenden bzw. der die Daten erzeugenden Komponente, den Zeitstempel einer empfangenden Komponente, insbesondere eines Archivsystems, und dergleichen.

Ein Ausführungsbeispiel des erfindungsgemäßen Verfahrens wird nachfolgend anhand der Zeichnungen erläutert. Es dient gleichzeitig der Erläuterung eines Ausführungsbeispiels eines erfindungsgemäßen Systems.

Dabei zeigen:
- Figur 1: in schematischer Darstellung ein Netzwerk aus vier industriellen Komponenten mit jeweils einer lokalen Uhr, und
- Figur 2: eine weitere Sicht des Netzwerks aus der Figur 1, wobei einige Module einer der Komponenten detaillierter dargestellt sind.

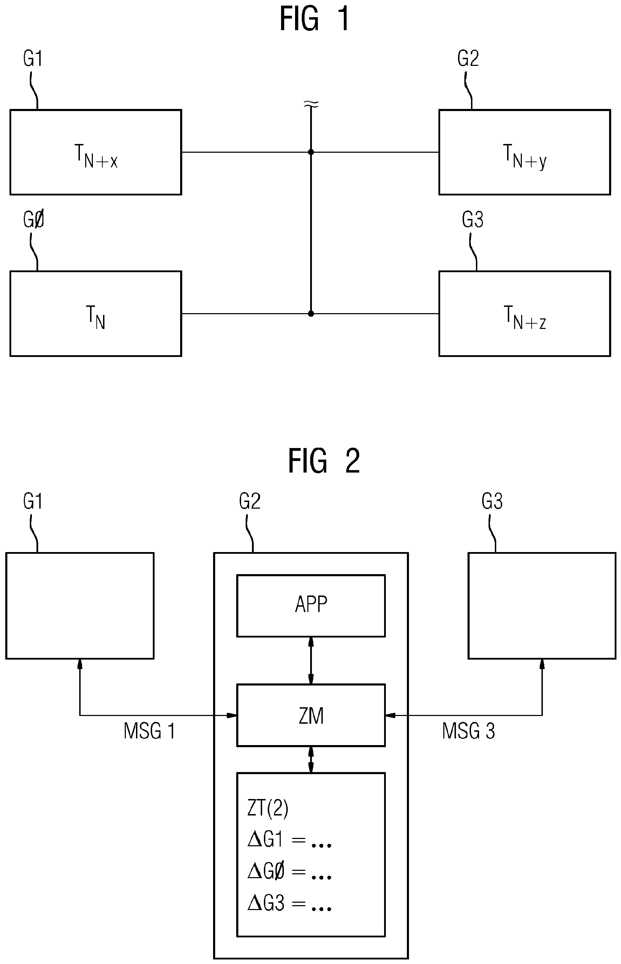

Die Figur 1 zeigt ein Netzwerk mit exemplarisch vier verschiedenen industriellen Komponenten G0, ..., G3 ("Geräte"), wobei jede der Komponenten G1, ..., G3 eine lokale Uhr aufweist, wobei die Uhrzeit der jeweiligen lokalen Uhr jeweils eine Abweichung zu den anderen lokalen Uhren aufweisen kann. Exemplarisch kann hierbei die Uhr der Komponente G1 gegenüber der Zeitinformation TN der Komponente G0 von X Nanosekunden aufweisen, wobei X auch ein negativer Wert sein kann; in der Figur ist das durch die Zeitangabe "T_{N+X}" visualisiert. Entsprechend weist die Uhr der Komponente G2 eine Abweichung von Y Nanosekunden gegenüber der Uhr der Komponente G0 auf. Die Abweichungen der lokalen Uhr der Komponente G3 gegenüber Zeitinformation der lokalen Uhr der Komponenten G0 ist entsprechend mit der Variablen Z gekennzeichnet. Da jede der lokalen Uhren gegenüber der lokalen Uhr der Komponente G0 eine andere Zeitabweichung aufweisen kann, sind auch die Werte X, Y und Z der Abweichung in der Regel unterschiedlich, außerdem weisen die Komponenten G1, G2 und G3 untereinander wiederum andere Differenzen der lokalen Zeitinformation zum gleichen Zeitpunkt auf.

Die Komponenten G0, ..., G3 weisen daher jeweils ein lokales "Zeitmanagement" bestehend aus einem Zeitstempelmodul ZM und einer Delta-Zeittabelle ZT(n) auf, die eine lokale Anwendung APP (das kann auch ein Modul zur Protokollierung bzw. Speicherung von Daten sein) mit zeitkorrigierten Daten der anderen Komponenten versorgt. Die Figur 2 zeigt exemplarisch am Beispiel der Komponente G2 eine die Daten konsumierende lokale Anwendung APP, ein Zeitstempelmodul ZM und eine lokale Delta-Zeittabelle ZT(2) mit jeweils einer Zeitdifferenzinformation ΔG0, AG1, AG3 der lokalen Uhr bezogen auf die anderen Komponenten G0, G1, und G3 des gezeigten Netzwerkes.

Die Zeitdifferenztabelle ZT(2) wird in diesem Ausführungsbeispiel anhand von Messdatenpaketen aufgebaut und regelmäßig aktualisiert, wobei diese Messdatenpakete in regelmäßigen Zeitabständen von den Komponenten G0, G1 und G3 an die Komponente G2 versendet werden; selbstverständlich werden auch zwischen den anderen Komponenten Messdatenpakete oder andere zur Feststellung einer Differenz der Zeitsysteme geeigneten Daten bzw. Nachrichten oder Datenpakete ausgetauscht. Diese Messdatenpakete enthalten eine Zeitinformation der Uhrzeit der jeweils sendenden Komponente G0, G1 und G3 zum Zeitpunkt des Versendens des Messdatenpakets. Beim Empfang des Messdatenpakets wird die Zeitinformation des Messdatenpakets mit der eigenen Uhrzeit (lokale Zeitinformation) der Komponente G2 verglichen bzw. es wird die Differenz gebildet. Eine etwaige Abweichung wird in die Zeitdifferenztabelle ZT(2) in den jeweiligen Eintrag ΔG0, ΔG1 oder ΔG3 eingetragen. In einer alternativen Ausführungsform kann berücksichtigt werden, wie viele Zwischenstationen ("Hops") das Messdatenpaket zurücklegen musste, wobei für jeden "Hop" eine Korrektur zur Berücksichtigung der benötigten Übertragungsdauer von der ermittelten Zeitdifferenz abgezogen werden kann; es kann also eine Laufzeitkorrektur erfolgen.

Im Folgenden soll angenommen werden, dass die Komponente G1 mittels einer Nachricht MSG1 einen industriellen Messwert, beispielsweise einen Amplitudenwert eines zeitabhängigen Messsignals, zu der Anwendung APP der Komponente G2 übermitteln möchte. Die Nachricht MSG1, also beispielweise ein Ethernet-Datenpaket mit den Sensordaten, umfasst also als Daten die entsprechende Amplitudeninformation und die lokale Uhrzeit der Komponente G1, zu der das Datum aufgezeichnet wurde. Die entsprechende Nachricht MSG1 wird nach dem Empfang durch die Komponente G2 dem Zeitstempelmodul ZM zugeleitet, welches die Uhrzeitinformation, die mit der Nachricht MSG1 geliefert wurde, extrahiert und mit dem Eintrag ΔG1 aus der Delta-Zeittabelle ZT(2) korrigiert, so dass der neu gebildete Zeitstempel diejenige Uhrzeit der lokalen Uhr der Komponente G2 wiederspiegelt, die dem Zeitpunkt entspricht, zu der die Daten bzw. das Datum durch die Komponente G1 erzeugt wurde. Alternativ zum Zeitpunkt der Erzeugung des Datums bzw. des Messzeitpunkts kann auch in einer anderen Ausführungsform der Zeitpunkt des Versendens durch die Komponente G1 protokolliert und in die Nachricht MSG1 eingeschrieben werden, insbesondere dann, wenn das Versenden der Daten zeitnah zu der Gewinnung der Daten erfolgt.

In der Figur 2 ist weiterhin zu sehen, dass auch die Komponente G3 Datenpakete MSG3 mit der Komponente G2 austauscht. Die von der Komponente G3 versendeten Nachrichten MSG3 können analog zu den Nachrichten MSG1 der Komponente G1 ebenfalls zeitgestempelte Daten enthalten, die vor der Verarbeitung mit der Anwendung APP mit dem Zeitstempelmodul ZM und unter Berücksichtigung der Zeitdifferenzinformation ΔG3 auf die lokale Uhrzeit der Komponente G2 normalisiert werden, d.h., dass die Zeitstempelinformation geändert wird und damit in der Zeitdomäne der Komponente G2 gültig ist. Damit kann die Anwendung APP die von den Komponenten G1 und G3 gelieferten Daten direkt miteinander in Bezug setzen, speichern, weiterleiten an andere Komponenten etc.

In einer bevorzugten Variante wird die Delta-Zeittabelle ZT(2) ausschließlich anhand spezieller Messdatenpakte erzeugt bzw. aktualisiert, bei denen sichergestellt ist, dass die Messdatenpakete die zum Zeitpunkt des Versendens aktuelle Uhrzeitinformation der sendenden Komponente beinhalten und wobei Maßnahmen zur Laufzeitkorrektur erfolgen. So ist es möglich, solche vorzugsweise kleinen Messdatenpakete in einem Netzwerk zu priorisieren, um die Laufzeit (Übertragungsdauer) klein und deterministisch zu halten. Andere, auch größere Datenpakete können dann auch ältere zeitgestempelte Daten transportieren und/oder verzögert übermittelt werden, wonach die enthaltenen Daten dann anhand der vorher ermittelten Zeitdifferenzinformation korrigiert werden.

Es ist möglich, die Einträge in der Zeitdifferenztabelle anhand des ersten eintreffenden Datenpaketes anzulegen, unabhängig von der Art des Datenpaktes (reguläres Datenpaket oder Messdatenpaket), aber für spätere Aktualisierungen nur Messdatenpakete und deren Zeitstempel zu verwenden. Außerdem ist es möglich, den jeweiligen Tabelleneinträgen eine Güteinformation zuzuordnen, die sich beispielsweise aus der Art des bei der letzten Aktualisierung verwendeten Datenpakets, einer etwaigen Laufzeitkorrektur und/oder der seit der letzten Aktualisierung verstrichenen Zeit bemisst. Bei einer unzureichenden Güte kann dann ein neues Messdatenpaket vom jeweiligen Kommunikationspartner angefordert werden.

## Patentansprüche

1. Verfahren zum Austausch zeitgestempelter Daten (MSG1, MSG3) zwischen Komponenten (G0, ..., G3) in einem Datennetzwerk,
wobei jede Komponente (G0, ..., G3) jeweils eine lokale Uhr aufweist,
wobei die Uhrzeit der jeweiligen lokalen Uhr zum Zeitstempeln von zu versendenden Daten (MSG1, MSG3) bei der Übertragung der Daten (MSG1, MSG3) von einer sendenden Komponente (G0, ..., G3) zu einer empfangenden Komponente (G0, ..., G3) verwendet wird,
**dadurch gekennzeichnet,**
**dass** in jeder die Daten (MSG1, MSG3) empfangenden Komponente (G0, ..., G3) eine Zeitdifferenztabelle (ZT) mit jeweils einer Zeitdifferenzinformation (ΔG0, ..., ΔG3) zwischen der lokalen Uhrzeit und der Uhrzeit jeder sendenden Komponente (G0, ..., G3) geführt wird,
wobei bei der Verwendung oder Speicherung empfangener Daten (MSG1, MSG3) anhand des Zeitstempels der empfangenen Daten (MSG1, MSG3) und anhand der Zeitdifferenzinformation (ΔG0, ..., ΔG3) zur sendenden Komponente (G0, ..., G3) durch die empfangende Komponente (G0, ..., G3) den Daten (MSG1, MSG3) ein auf die jeweilige lokale Uhrzeit korrigierter Zeitstempel zugeordnet wird.

2. Verfahren nach Patentanspruch 1,
**dadurch gekennzeichnet,**
**dass** durch den korrigierten Zeitstempel der durch die sendende Komponente (G0, ..., G3) zugeordnete Zeitstempel jeweils ersetzt wird.

3. Verfahren nach einem der vorherigen Patentansprüche,
**dadurch gekennzeichnet,**
**dass** als die die Daten (MSG1, MSG3) empfangende Komponente (G0, ..., G3) und/oder als die die Daten (MSG1, MSG3) sendende Komponente (G0, ..., G3) eine Cloud-Anwendung einer industriellen Automatisierungslösung oder ein industrielles Edge-Gerät verwendet wird.

4. Verfahren nach einem der vorherigen Patentansprüche,
**dadurch gekennzeichnet,**
**dass** die Zeitdifferenztabelle (ZT) durch den jeweiligen Austausch von Messdatenpaketen zwischen der empfangenden Komponente (G0, ..., G3) mit der Zeitdifferenztabelle (ZT) und den sendenden Komponenten (G0, ..., G3) aufgebaut oder aktualisiert wird.

5. Verfahren nach einem der vorherigen Patentansprüche,
**dadurch gekennzeichnet,**
**dass** die Zeitdifferenztabelle (ZT) einer empfangenden Komponente (G0, ..., G3) jeweils beim Empfang von Daten (MSG1, MSG3) oder Datenpaketen mit Sendezeitstempel aufgebaut oder aktualisiert wird.

6. Verfahren nach einem der vorherigen Patentansprüche,
**dadurch gekennzeichnet,**
**dass** die jeweilige Zeitdifferenztabelle (ZT) von einer zentralen Instanz befüllt oder aktualisiert wird, wobei in der zentralen Instanz anhand von direkt zwischen der zentralen Instanz und den jeweiligen Komponenten (G0, ..., G3) ausgetauschten Daten (MSG1, MSG3) oder Messdatenpaketen eine Master-Zeitdifferenztabelle (ZT) befüllt oder aktualisiert wird.

7. Verfahren nach Patentanspruch 6,
**dadurch gekennzeichnet,**
**dass** als die zentrale Instanz ein industrielles Edge-Gerät verwendet wird.

8. Verfahren nach einem der vorherigen Patentansprüche,
**dadurch gekennzeichnet,**
**dass** Daten (MSG1, MSG3), denen ein auf die jeweilige lokale Uhrzeit korrigierter Zeitstempel zugeordnet worden ist, als zeitkorrigiert gekennzeichnet werden.

9. Verfahren nach Patentanspruch 8,
**dadurch gekennzeichnet,**
**dass** die Kennzeichnung eine Identifikation derjenigen Komponente (G0, ..., G3) umfasst, auf deren lokale Uhrzeit der Zeitstempel jeweils korrigiert wurde.

10. System zum Austausch zeitgestempelter Daten (MSG1, MSG3) in einem Datennetzwerk,
wobei das System aus zumindest einer die Daten (MSG1, MSG3) sendenden Komponente (G0, ..., G3) und zumindest einer die Daten (MSG1, MSG3) empfangende Komponente (G0, ..., G3) besteht,
wobei jede Komponente (G0, ..., G3) eine lokale Uhr aufweist,
wobei zumindest die die Daten (MSG1, MSG3) sendende Komponente (G0, ..., G3) zum Zeitstempeln von zu versendenden Daten (MSG1, MSG3) bei der Übertragung zu einer empfangenen Komponente (G0, ..., G3) eingerichtet ist,
**dadurch gekennzeichnet,**
**dass** zumindest die Daten (MSG1, MSG3) empfangende Komponente (G0, ..., G3) eine Zeitdifferenztabelle (ZT) mit jeweils einer Zeitdifferenzinformation (ΔG0, ..., ΔG3) zwischen der lokalen Uhrzeit und der Uhrzeit einer oder jeder die Daten (MSG1, MSG3) sendenden Komponente (G0, ..., G3) aufweist,
**dass** zumindest in jeder die Daten (MSG1, MSG3) empfangende Komponente (G0, ..., G3) ein Zeitstempelmodul vorgesehen ist, wobei das Zeitstempelmodul zur Zuweisung eines korrigierten Zeitstempels zu den empfangenden Daten (MSG1, MSG3) eingerichtet ist,
wobei das Zeitstempelmodul zur Verwendung einer Zeitdifferenzinformation (ΔG0, ..., ΔG3) aus der Zeitdifferenztabelle (ZT) eingerichtet ist, wobei die Zeitdifferenzinformation (ΔG0, ..., ΔG3) eine Abweichung zwischen der lokalen Uhr der die Daten (MSG1, MSG3) empfangenden Komponente (G0, ..., G3) und einer lokalen Uhr der die Daten (MSG1, MSG3) sendende Komponente (G0, ..., G3) jeweils angibt.
